Europäisches Patentamt

European Patent Office

Office européen des brevets

(19)

(11) **EP 0 211 194 B2**

(12) **NEUE EUROPÄISCHE PATENTSCHRIFT**

(45) Veröffentlichungstag und Bekanntmachung des Hinweises auf die Entscheidung über den Einspruch:
**21.08.1996 Patentblatt 1996/34**

(45) Hinweis auf die Patenterteilung:
**12.09.1990 Patentblatt 1990/37**

(21) Anmeldenummer: **86108149.5**

(22) Anmeldetag: **14.06.1986**

(51) Int Cl.6: **C04B 28/14**, C04B 28/16, C04B 11/30

(54) **Mörtelmischung für schnellerhärtende Putze von Dämmsystemen**

Mortar mixture for quick-setting casts of insulation systems

Mélange de mortier pour crépis de systèmes isolants durcissant rapidement

(84) Benannte Vertragsstaaten:
**AT BE CH DE FR GB IT LI LU NL SE**

(30) Priorität: **03.08.1985 DE 3527979**

(43) Veröffentlichungstag der Anmeldung:
**25.02.1987 Patentblatt 1987/09**

(73) Patentinhaber: **SICOWA Verfahrenstechnik für Baustoffe GmbH & Co. KG**
**D-52072 Aachen (DE)**

(72) Erfinder: **Koslowski, Thomas, Dipl. Mineraloge**
**D-5100 Aachen (DE)**

(74) Vertreter: **Sparing - Röhl - Henseler**
**Patentanwälte**
**Postfach 14 04 43**
**40074 Düsseldorf (DE)**

(56) Entgegenhaltungen:
**EP-A- 0 143 633**    **DD-A- 140 245**
**DE-A- 2 409 699**    **DE-A- 2 428 711**
**GB-A- 2 033 367**

• **M. Balsevics, Dissertation TH Aachen, 1980**

Bemerkungen:
Die Akte enthält technische Angaben, die nach dem Eingang der Anmeldung eingereicht wurden und die nicht in dieser Patentschrift enthalten sind.

**Beschreibung**

Die Erfindung betrifft eine Mörtelmischung für schnellerhärtende Putze von Dämmsystemen, enthaltend Bindemittel, übliche Zuschläge und Zusätze.

Aus der FR-PS 22 33 295 ist es bekannt, einerseits ein Zement-, Mörtel- oder Betongemisch und andererseits einen Wirkstoff zur Schnellerstarrung in Form eines Pulvers oder einer Suspension aus Calciumaluminat und anorganischem Sulfat herzustellen, wobei die sich durch Vermischen hiervon ergebende Rohmischung sofort zu verarbeiten ist. Der Wirkstoff kann einen Carboxylsäureverzögerer als auch einen Beschleuniger, der etwa auch geringe Mengen an Kalkhydrat aufweisen kann, enthalten. Der Wirkstoff soll möglichst mindestens eine halbe Stunde nicht erstarren, jedoch bei Vermischung mit dem Zement-, Mörtel- oder Betongemisch sehr rasch zu dessen Erstarrung führen, es wird ein Ansteifen in wenigen Minuten, z.B. zwischen 5 und 10 min, angestrebt. Nachteilig ist es, daß getrennt zwei Mischungen hergestellt werden müssen, die anschließend miteinander zu mischen sind, wonach sich nur eine sehr geringe Verarbeitungszeit und eine hohe Temperaturempfindlichkeit ergibt. Die Frühfestigkeit beruht auf Ettringitbildung und erfolgt relativ langsam im Stundenbereich.

Bei Mörteln für Putze, die auf Dämmschichten, beispielsweise Polystyrolplatten, ausgebracht werden, besteht einerseits das Problem, daß der Mörtel dünnschichtig auf großen Flächen aufgebracht wird, so daß eine lange Verarbeitungszeit notwenig ist, während andererseits die Dämmplatten durch Besonnung oder Beschattung sich innerhalb kurzer Zeiträume dehnen bzw. zusammenziehen. Hierdurch kann eine Rißbildung innerhalb des applizierten, noch nicht verfestigten Mörtels hervorgerufen werden. Abgesehen davon tritt in dem angemachten, insbesondere in dem applizierten Mörtel aufgrund chemischer und physikalischer, Vorgänge eine kontrahierende Formänderung im Frühfestigkeitsbereich des Mörtels auf, die zur Rißbildung führen kann.

Aufgabe der Erfindung ist es dayer, eine Fertigmörtelmischung zu schaffen, die nach dem Anmachen mehrere Stunden verarbeitbar ist, schnell erhärtet und deren Formänderungen im Frühbereich die Herstellung schadensfreier Dämmsysteme ermöglicht.

Diese Aufgabe wird durch eine Mörtelmischung, vorzugsweise Fertigmörtelmischung für schnellerhäartende Putze von Dämmsystemen, enthaltend Bindemittel, üblicher Zuschläge und Zusätze gelöst, die gekennzeichnet ist durch einen Gehalt an

a. 10 bis 40 Gew.-Teilen reaktive Calciumsilikate,
b. 3 bis 7 Gew.-Teilen reaktive Aluminate, berechnet als CA,
c. 1 bis 7 Gew.-Teilen Calciumhydroxid,
d. 0,2 bis 2 Gew.-Teilen Calciumsulfathalbhydrat und/oder -anhydrit-III,
e. 0,4 bis 4 Gew.-Teilen Calciumsulfatanhydrit-II,
f. 0,03 bis 0,5 Gew.-Teilen organischem, die Keimbildung und das Wachstum von Calciumaluminatsulfathydrat hemmendem Abbindeverzögerer,

wobei das Verhältnis der Komponenten b:c kleiner oder gleich 5 ist, derart, daß eine Reaktionskette über die folgenden Reaktionsprodukte

Primärettringit, Monophasen (Calciumaluminatmonosulfat), Sekundärettringit und Calciumhydrosilikate abläuft.

Mit einer derartigen Mörtelmischung wird eine ausreichende Verbundfestigkeit auf einer Dämmschicht erhalten, Dekorschichten können auf dem hergestellten Putz aufgebracht werden, der Putz besitzt hierzu eine genügende Tragfestigkeit. Ferner lassen sich Putze aus einer derartigen Mörtelmischung mit genügend hohen Druck- und Schlagfestigkeiten erzielen. Im hergestellten Putz ergeben sich nur geringe eigene Zugspannungen infolge des erzielten geringen Schwindmaßes im Früh- und Langzeitbereich. Thermische Formänderungen der Dämmschicht im Frühbereich werden aufgenommen.

Mit einer derartigen Mörtelmischung lassen sich Topfzeiten von mehreren Stunden, beispielsweise 2 bis 4 Stunden, einstellen. Die Topfzeit läßt sich durch entsprechende Mengen an Calciumsulfathalbhydrat und organischem Abbindeverzögerer variieren. Letzterer wird vorzugsweise in einer Menge von 0,05 bis 0,15 Gewichtsteilen verwendet. Als Calciumsulfathalbhydrat eignet sich beispielsweise Stuckgips, als organischer Abbindeverzögerer eignet sich beispielsweise eine Oxycarbonsäure, etwa Wein-, Apfel, Glukon- oder Zitronensäure sowie deren Salze. Und zwar eignen sich solche organischen Abbindeverzögerer, die eine hohe Löslichkeit in Wasser, eine hohe Lösungsgeschwindigkeit aufweisen sowie schwerlösliche Salze mit Calcium bzw. Aluminium bilden. Insbesondere eignet sich Zitronensäuremonohydrat. Die Säuren bzw. deren Salze können auch in Mischung verwendet werden. Da es sich um eine Fertigmörtelmischung handelt, versteht es sich, daß die organischen Abbindeverzögerer pulverförmig in der Mörtelmischung enthalten sind.

Für die Topfzeit des angemachten Mörtels ist eine Mindestmenge an Calciumsulfathalbhydrat wegen der hohen Lösungsgeschwindigkeit und Löslichkeit hiervon notwendig, jedoch sollte die Menge an Halbhydrat andererseits auch so gering wie möglich gehalten werden. Das Halbhydrat kann auch gegebenenfalls ganz oder teilweise durch Anhydrat-

III ersetzt werden, der ebenfalls eine sehr hohe Lösungsgemischwindigkeit und Löslichkeit in Wasser aufweist. Für die Einstellung der Topfzeit ist Anhydrit-II ungeeignet, während das Dihydrat nur geringen Einfluß ausüben kann.

Durch die Schnellerhärtung nach Beendigung der Topfzeit ergibt sich sehr schnell eine hohe Frühfestigkeit infolge einer steilen Erstarrungscharakteristik. Im Frühbereich finden vorrangig die Reaktionen der reaktiven Aluminate mit Calciumhydroxid und weiter mit Anhydrit-II statt. Die sich hierbei bildenden Reaktionsprodukte sind zunächst Monophasen (Calciumaluminatmonosulfat) und später Ettringit, der nadelförmig und langprismatisch ausgebildet ist. Zusätzlich verstärkt sich der Einfluß der sich verspätet bildenden Calciumhydrosilikate. Durch diese Vorgänge werden praktisch in zwei Stufen die Formänderungen im Frühbereich gesteuert. Durch Einstellung des Verhältnisses der reaktiven Aluminate zu den reaktiven Calciumsilikaten, zum Calciumhydroxid und zum Anhydrit-II lassen sich diese Formänderungen im Frühbereich steuern, und zwar vorzugsweise derart, daß zunächst durch Ausbildung der plättchenförmigen Monophasen eine Volumenexpansion (das Druckspannungen erzeugt) in einer ersten Stufe stattfindet, das dem Schwinden (das Zugspannungen erzeugt) während dieses Zeitraumes entgegenwirkt, während anschließend durch die Ettringitbildung eine Volumenexpansion in einer weiteren Stufe stattfindet, das dem normalerweise auftretenden Schwinden während dieses Zeitraumes entgegenwirkt. Es läßt sich auch eine absolute Volumenvergrößerung des Mörtels durch entsprechende Wahl der Gewichtsteile einstellen.

Die Endfestigkeit des erhaltenen Putzes ergibt sich hauptsächlich durch die Reaktion der reaktiven Calciumsilikate mit Wasser, hierbei bilden sich CSH-Phasen. Durch Veränderung des Verhältnisses der reaktiven Calciumsilikate zu den reaktiven Aluminaten werden auch die Endfestigkeiten beeinflußt und können hierdurch entsprechend eingestellt werden.

Der Anhydrit-II spielt bei der Steuerung der Schnellerstarrung infolge seiner Reaktionsträgheit nur eine untergeordnete Rolle. Während das Halbhydrat bei der Bildung von Primärettringit und der Monophasen verbraucht wird, bleibt der Anhydrit-II größtenteils erhalten und kann nun, nachdem die Aluminate ausreagiert sind, mit den vergleichsweise Al-reichen und $SO_4$-armen Monophasen und nicht reagiertem Restaluminat zu dem $SO_4$-reicheren Sekundärettringit, der durch seinen langstrahligen, faserigen Habitus ein sehr günstiges Verfilzen und Verwachsen der Restmonophasen und der übrigen Restkomponenten bewirkt, gemäß folgender Reaktion reagieren

$$C_3ACs \cdot H_{12} + 2Cs + 20H \rightarrow C_3A3Cs \cdot H_{32}$$

Die Sekundärettringitbildung ist mit einem weiteren Festigkeitsanstieg verbunden.

Anhydrit-II kann mit einer Blaine-Oberfläche von 1000 bis 10000 $cm^2/g$, insbesondere 3000 bis 8000 $cm^2/g$, verwendet werden, gewöhnlich wird er in Zementfeinheit bis Kalkhydratfeinheit verwendet.

Sowohl Zitronensäure (oder die ansonsten verwendete organische Verbindung) als auch Halbhydrat und Anhydrit stellen Abbindeverzögerer für reaktives Aluminat-etwa vom Tonerdezement-dar (ggf. kann Sulfat aber auch die Reaktion von reinem Tonerdezement beschleunigen), wirken jedoch alleine nicht in kalkhydratreichen System, da sie dann das reaktive Aluminat nicht genügend gegen das Kalkhydrat abschirmen und dadurch auch eine Abbindeverzögerung herbeiführen können. Überraschenderweise hat es sich jedoch gezeigt, daß durch die Kombination beider Abbindeverzögerer reaktives Aluminat auch in kalkhydratreicher Umgebung, d.h. in solcher Umgebung, in der wenigstens etwa 30% des zur stöchiometrischen Reaktion mit dem Aluminat erforderlichen Kalkhydrats (als solches zugegeben oder durch Löschen von Branntkalk im angemachten Mörtel in der Anfangsphase fortlaufend entstehend) vorhanden ist, in gewünschter Weise verzögert werden kann.

Die reaktiven Calciumsilikate, die vorzugsweise in einer Menge von 15 bis 25 Gewichtsteilen enthalten sind, umfassen $C_3S$, $C_2S$ und $C_2AS$. Als reaktive Aluminate, die vorzugsweise in einer Menge von 4 bis 6 Gewichtsteilen vorhanden sind, eignen sich $C_3A$, CA, $C_{12}A_7$ und $C_4AF$ (letzterer ist aber weniger reaktiv als die vorstehenden). Als reaktive Aluminate können CA bzw. $C_{12}A_7$ alleine oder in Kombination und mit den übrigen aufgeführten Aluminaten verwendet werden, jedoch ist eine CA- oder $C_{12}A_7$-Komponente erforderlich, da nur diese mit Kalkhydrat zu Monophasen und Ettringit reagieren können. $C_{12}A_7$ kann fluorstabilisiert sein. Stattdessen oder zusammen mit den aufgeführten reaktiven Aluminaten kann auch schwer lösliches Aluminiumsulfat verwendet werden.

Abhängig von der erforderlichen Verzögerungszeit, der Erstarrungscharakteristik und der anzustrebenden Volumenexpansion im Früh bereich kann das Verhältnis von reaktiven Aluminaten, berechnet als CA, und dem Gesamtsulfatgehalt zwischen etwa 5:1 und 1:1, vorzugsweise zwischen 3:1 und 2:1, liegen. Außerdem ist ein gewisser Sulfatgehalt zweckmäßig, um Monophasen und Ettringit zu stabilisieren und keine unerwünschten Umwandlungsprodukte wie Hydrogranat und Gehlenithydrat zu erhalten. Insgesamt bleibt man aber bei den vorstehend genannten Verhältnissen bei einem sehr niedrigen Sulfatgehalt, der eine Langzeitraumbeständigkeit sicherstellt.

In Kombination mit den aufgeführten reaktiven Calciumsilikaten können auch latenthydraulische Stoffe als reaktive Calciumsilikate, beispielsweise Hochofenschlacke und puzzolanisch-hydraulische Stoffe verwendet werden.

Calciumhydroxid wird vorzugsweise in einer Menge von 2 bis 4 Gewichtsteilen verwendet und kann gegebenenfalls als Branntkalk eingebracht werden.

Calciumsulfathalbhydrat wird vorzugsweise in einer Menge von 0,5 bis 1 Gewichtsteilen verwendet und beispielsweise als Stuckgips oder als Autoklavgips eingebracht.

Calciumsulfatanhydrit-II wird vorzugsweise in einer Menge von 0,8 bis 2,5 Gewichtsteilen verwendet, und zwar in Form von fein aufgemahlenem Naturanhydrit oder als Chemieanhydrit, und zwar in schwer löslicher bis unlöslicher Form. Falls lösliche Anteile im Anhydrit vorhanden sind, ist dies bei der Dosierung des Calciumsulfathalbhydrates zu berücksichtigen.

Das Verhältnis zwischen reaktiven Aluminaten und Calciumhydroxid ist kleiner als 3, um die gewünschte Schnellerstarrungscharakteristik über die Monophasen zu erhalten. Bei Verwendung der Mörtelmischung bei sehr hohen Außentemperaturen kann auch ein Wert für dieses Verhältnis etwas größer als 3 und kleiner oder gleich 5 zweckmäßig sein.

Das Calciumsulfatanhydrit und/oder -halbhydrat kann partiell durch Calciumsulfatdihydrat erzetzt werden, um den Übergang zwischen den Formänderungsstufen zu glätten. Letzeres kann aver auch durch die Wahl des Anhydrits-II bewirkt werden.

Eine Erhöhung der Menge an reaktiven Calciumsilikaten erhöht die Endfestigkeit. Eine Erhöhung der Menge an reaktiven Aluminaten erhöht die Früh- und Endfestigkeit. Eine Erhöhung des Calciumhydroxidgehalts erhöht im Zusammenhang mit einer Erhöhung der reaktiven Aluminate die erste Stufe der Frühfestigkeit und ergibt eine steilere Erstarrungscharakteristik. Eine Erhöhung des Calciumsulfathalbhydratgehaltes führt zu einer Verlängerung der Topfzeit und einer Abflachung der Erstarrungscharakteristik. Eine Erhöhung des Calciumsulfatanhydrit-II-Gehaltes im Zusammenhang mit einer Erhöhung der reaktiven Aluminate führt zu einer Erhöhung der Schwindkompensation im Frühbereich und damit der Frühfestigkeit. Eine Vergrößerung der Menge an eingesetztem organischem Verzögerer führt zu einer Verlängerung der Topfzeit und einer Abflachung der Erstarrungscharakteristik.

Die Mörtelmischung muß, um zusätzlich zu einer geringen Langzeitschwindung zu führen, einen Mindestgehalt an Calciumhydroxid abspaltenden Verbindungen, beispielsweise C3S, enthalten, damit wenigstens bis zum Erreichen der Endfestigkeit ein hochalkalisches Milieu aufrechterhalten bleibt. Dies ist insbesondere bei luftporosierten Mörteln zweckmäßig, um den Ettringit vor Carbonsatisierung zu schützen.

Zur Erzielung der angestrebten Zusammensetzung kann man eine Mischung aus Portland- und Tonerdezement verwenden, wobei die zuzusetzenden Mengen an Halbhydrat und Anhydrit-II sowie an Calciumhydroxid auf den Gehalt und die Art des Sulfats bzw. den Freikalkgehalt des Portland-Zements abzustimmen ist. Anstelle des Portlandzements läßt sich auch vorteilhaft ein Portlandzementklinker-auf Zementfeinheit gemahlen-einsetzen, wobei dann das gesamte Sulfat getrennt zu dosieren ist.

Als Zuschläge für die Mörtelmischung kommen beispielsweise Quarzsand, Quarzmehl, Kalksteinmehl, Flugasche oder dergleichen infrage, die das Stützgerüst des Putzes bilden. Die Zuschläge sind in üblicher Weise auf eine stetige Sieblinie abzustimmen. Bei Verwendung des Putzes als Dekorputz, etwa Kratzputz, kann auch eine Ausfallkörnung gewählt werden. Auch können mineralische oder organische Fasern beigemengt werden. Im Putz kann ein Armierungsgewebe eingebettet sein, das beim Applizieren des Mörtels aufgebracht wird. Bei Dämmsystemen wird der Putz üblicherweise in einer Menge kleiner 10 kg/m$^2$ entsprechend einer Putzdicke kleiner 1 cm aufgetragen, um Wärmestaus zu vermeiden.

Als Zusatzmittel und -stoffe kommen beispielsweise Hydrophobierungsmittel, Mittel zur Verbesserung des Wasserrückhaltevermögens, zur Verbesserung der Verarbeitbarkeit, Luftporenbildner, Pigmente, oder dergleichen infrage. Der Anteil des Bindemittels an der Mörtelmischung liegt im allgemeinen im Bereich zwischen 20 und 40 Gewichtsteilen.

Die Dosierung des Anmachwassers bestimmt sich durch die Anforderungen an die Verarbeitbarkeit und den Untergrund, auf den der Putz aufzubringen ist.

Beispiel:

Eine Mörtelmischung bestehend aus 30,25 Gew.-Teilen Bindemittel und 69,75 Gew.-Teilen Zuschläge und Zusätze wurde hergestellt:

| | |
|---|---|
| Portlandzement 45 F | 25,380 Gew.-Teile |
| Tonerdezement (50% $Al_2O_3$) | 2,870 Gew.-Teile |
| Calciumsulfatanhydrit-II | 0,540 Gew.-Teile |
| Calciumsulfathalbhydrat | 0,116 Gew.-Teile |
| Zitronensäuremonohydrat | 0,144 Gew.-Teile |
| Calciumhydroxid | 1,200 Gew.-Teile |
| Quarzitisch 0,1-0,6 mm | 65,85 Gew.-Teile |
| Zusätze nach DIN 18550, wie Cellulosederivate, Hydrophobierungsmittel, Metallseife, Pulverdispersion und Silicone | 3,9 Gew.-Teile |

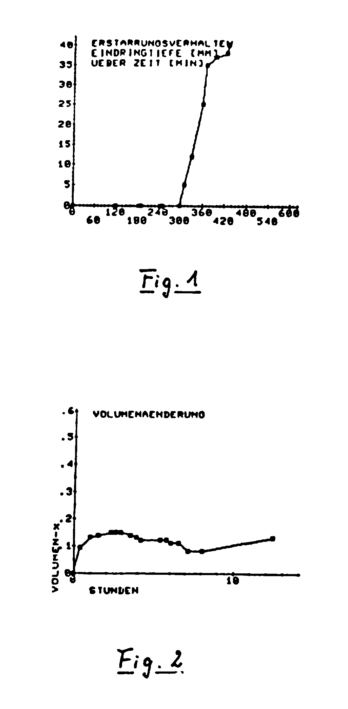

Mit 29 Gew.-Teilen Wasser angemacht ergibt sich eine Mörtelmischung mit einem Luftporengehalt von 33 Vol.-%,

die eine Topfzeit von ca. 300 min (bei 20°C) besitzt und dann mit einer steilen Charakteristik erstarrt. Das Erstarrungsverhalten ist in Fig. 1 dargestellt. Die Topfzeit verschiebt sich bei höheren Temperaturen zu kürzeren Zeiten und bei niedrigeren Temperaturen zu höheren Zeiten, bei 15°C beträgt sie etwa 330 min, bei 30°C etwa 180 min.

Das Frühverformungsverhalten ist derart, daß sich nach einer Volumenkontraktion von ca. 0,15 Vol.-% in den ersten 60 min nach dem Anmachen eine zweistufige Expansion um jeweils ca. 0,05 Vol.-% ergibt,

vgl. Fig. 2. Die beiden Expansionen entsprechen der Ausbildung der Monophasen bzw. des Ettringits. Die angemachte Mörtelmischung aufgetragen auf eine aus Polystyrolplatten bestehende Dämmschicht verhält sich problemlos und führt zu keiner Rißbildung.

Bezüglich der Definition der Calciumsulfatphasen, etwa Anhydrit-II, wird beispielsweise auf Winnacker, Küchler, Chemische Technologie, München 1983, Band III, S. 263 ff. verwiesen. Portland- und Tonerdezementzusammensetzungen sind beispielsweise im Zement-Taschenbuch, Wiesbaden 1984, S. 49 ff., herausgegeben vom Verein Deutscher Zementwerke, aufgeführt.

## Patentansprüche

1.  Mörtelmischung, vorzugsweise Fertigmörtelmischung für schnellerhärtende Putze von Dämmsystemen, enthaltend Bindemittel, übliche Zuschläge und Zusätze, gekennzeichnet durch einen Gehalt an

    a. 10 bis 40 Gew.-Teilen reaktive Calciumsilikate,
    b. 3 bis 7 Gew.-Teilen reaktive Aluminate, berechnet als CA,
    c. 1 bis 7 Gew.-Teilen zugesetztem Calciumhydroxid,
    d. 0,2 bis 2 Gew.-Teilen Calciumsulfathalbhydrat und/oder -anhydrit-III,
    e. 0,4 bis 4 Gew.-Teilen Calciumsulfatanhydrit-II,
    f. 0,03 bis 0,5 Gew.-Teilen organischem, die Keimbildung und das Wachstum von Calciumaluminatsulfathydrat hemmendem Abbindeverzögerer,

    wobei das Verhältnis der Komponenten b:c kleiner oder gleich 5 ist, derart, daß eine Reaktionskette über die folgenden Reaktionsprodukte
    Primärenringit, Monophasen (Calciumaluminatmonosulfat), Sekundärettringit und Calciumhydrosilikate abläuft.

2.  Mörtelmischung nach Anspruch 1, dadurch gekennzeichnet, daß das Verhältnis der Komponenten b:c kleiner als 3 ist.

3.  Mörtelmischung nach Anspruch 1 oder 2, gekennzeichnet durch

    15 bis 25 Gew.-Teile reaktive Calciumsilikate und/oder
    4 bis 6 Gew.-Teile reaktive Aluminate und/oder
    2 bis 4 Gew.-Teile Calciumhydroxid und/oder
    0,5 bis 1,0 Gew.-Teile Calciumsulfathalbhydrat und/oder
    0,8 bis 2,5 Gew.-Teile Calciumsulfatanhydrit-II und/oder
    0,05 bis 0,15 Gew.-Teile organischen Abbindeverzögerer.

4.  Mörtelmischung nach einem der Ansprüche 1 bis 3, dadurch abgewandelt, daß reaktives Aluminat durch schwerlösliches Aluminiumsulfat ersetzt wird mit der Maßgabe, daß das Verhältnis von reaktiven Aluminaten zu dem Gesamtsulfatgehalt zwischen etwa 5:1 und 1:1, vorzugsweise zwischen 3:1 und 2:1 liegt.

5.  Mörtelmischung nach einem der Ansprüche 1 bis 4, dadurch abgewandelt, daß das Calciumsulfatanhydrit und/oder -halbhydrat partiell durch Calciumsulfatdihydrat ersetzt ist.

6.  Mörtelmischung nach einem der Ansprüche 1 bis 5, dadurch abgewandelt, daß das Calciumhydroxid ganz oder teilweise durch Calciumoxid ersetzt ist.

7.  Mörtelmischung nach einem der Ansprüche 1 bis 6, dadurch gekennzeichnet, daß zur Erzielung einer geringen Langzeitschwindung Calciumhydroxid wenigstens bis zum Erreichen der Endfestigkeit abspaltende Verbindungen enthalten sind.

8. Mörtelmischung nach einem der Ansprüche 1 bis 7, dadurch gekennzeichnet, daß sie als organischen Abbindeverzögerer Oxycarbonsäure(n), insbesondere Zitronensäure, oder deren Salz(e) enthält.

**Revendications**

1. Mélange de mortier, de préférence mélange de mortier prêt à l'emploi pour enduits à durcissement rapide de systèmes d'isolation, contenant des liants, des agrégats classiques et des additifs classiques, caractérisé en ce qu'il contient

   a. 10 à 40 parties en poids de silicates de calcium réactif,
   b. 3 à 7 parties en poids d'aluminates réactifs exprimés en CA,
   c. 1 à 7 parties en poids d'hydroxyde de calcium ajouté,
   d. 0,2 à 2 parties en poids de sulfate de chaux semi-hydraté et/ou de sulfate de chaux anhydre ou anhydrite-III,
   e. 0,4 à 4 parties en poids de sulfate de chaux anhydre ou anhydrite-II,
   f. 0,03 à 0,5 partie en poids d'un retardateur organique de prise empêchant la formation de germes et inhibant la croissance d'aluminosulfate de calcium hydraté,

   le rapport des composants b:c étant inférieur ou égal à 5, de façon telle que se déroule une chaîne réactionnelle passant par les produits de réaction suivants:
   Ettringite primaire, monophases (aluminomonosulfate de calcium), ettringite secondaire et hydrosilicates de calcium.

2. Mélange de mortier suivant la revendication 1, caractérisé en ce que le rapport des composants b:c est inférieur à 3.

3. Mélange de mortier suivant la revendication 1 ou 2, caractérisé en ce qu'il contient

   15 à 25 parties en poids de silicates de calcium réactifs et/ou
   4 à 6 parties en poids d'aluminates réactifs et/ou
   2 à 4 parties en poids d'hydroxyde de calcium et/ou
   0,5 à 1,0 partie en poids de sulfate de calcium semi-hydraté et/ou
   0,8 à 0,15 partie en poids de sulfate de chaux anhydre-II et/ou
   0,05 à 0,15 partie en poids de retardateur organique de prise.

4. Mélange de mortier suivant les revendications 1 à 3, modifié par le fait que l'aluminate réactif est remplacé par du sulfate d'aluminium peu soluble et sous réserve que le rapport des aluminates réactifs à la teneur totale en sulfate se situe entre 5:1 et 1:1, de préférence entre 3:1 et 2:1.

5. Mélange de mortier suivant les revendications 1 à 4, modifié par le fait que le sulfate de chaux anhydre et/ou le sulfate de chaux semi-hydraté sont partiellement remplacés par du sulfate de calcium dihydraté.

6. Mélange de mortier suivant l'une des revendications 1 à 5, modifié par le fait que l'hydroxyde de calcium est remplacé en totalité ou en partie par de l'oxyde de calcium.

7. Mélange de mortier suivant l'une des revendications 1 à 6, caractérisé en ce que, pour l'obtention d'un faible retrait à long terme, des composés apportant de l'hydroxyde de calcium au moins jusqu'à ce que la résistance finale ait été atteinte sont présents.

8. Mélange de mortier suivant l'une des revendications 1 à 7, caractérisé en ce qu'il contient comme retardateurs organiques de prise, un ou plusieurs acides oxycarboxyliques, notamment de l'acide citrique, ou un ou plusieurs de leurs sels.

**Claims**

1. Mortar mixture, preferably ready-for-use mortar mixture for rapidly hardening plaster of insulation systems, containing binders, standard additions and additives, characterised by a content of

a. 10 to 40 parts by weight reactive calcium silicates,

b. 3 to 7 parts by weight reactive aluminates, calculated as CA,

c. 1 to 7 parts by weight of added calcium hydroxide,

d. 0.2 to 2 parts by weight calcium sulphate hemihydrate and/or calcium sulphate anhydrite-III,

e. 0.4 to 4 parts by weight calcium sulphate anhydrite-II,

f. 0.03 to 0.5 parts by weight organic setting retarders inhibiting the formation of nuclei and the growth of calcium aluminium sulphate hydrate,

with the ratio of the components b:c being smaller than or equal to 5, in such a manner that a reaction chain runs across the following reaction products:

primary ettringite, monophases (calcium aluminate monosulphate), secondary ettringite and calcium hydrosilicates.

2. Mortar mixture according to Claim 1, characterised in that the ratio of the components b:c is less than 3.

3. Mortar mixture according to Claim 1 or 2, characterised by

15 to 25 parts by weight reactive calcium silicates and/or

4 to 6 parts by weight reactive aluminates and/or

2 to 4 parts by weight calcium hydroxide and/or

0.5 to 1.0 parts by weight calcium sulphate hemihydrate and/or

0.8 to 0.15 parts by weight calcium sulphate anhydrite-II and/or

0.05 to 0.15 parts by weight organic setting retarders.

4. Mortar mixture according to one of Claims 1 to 3, modified in that reactive aluminate is replaced by difficultly soluble aluminium sulphate, with the proviso that the ratio of reactive aluminates to the total sulphate content is between about 5:1 and 1:1, preferably between 3:1 and 2:1.

5. Mortar mixture according to one of Claims 1 to 4, modified in that the calcium sulphate anhydrite and/or hemihydrate is partially replaced by calcium sulphate hydrate.

6. Mortar mixture according to one of Claims 1 to 5, modified in that the calcium hydroxide is fully or partially replaced by calcium oxide.

7. Mortar mixture according to one of Claims 1 to 6, characterised in that in order to achieve low longterm shrinkage it contains compounds which split off calcium hydroxide at least until the final strength is achieved.

8. Mortar mixture according to one of Claims 1 to 7, characterised in that it contains oxycarboxylic acid(s), in particular citric acid, or salts thereof as the organic setting retarders.

**Fig. 1**

**Fig. 2**